# EUROPÄISCHE PATENTSCHRIFT

(11) **EP 2 563 152 B1**
(45) Veröffentlichungstag und Bekanntmachung des Hinweises auf die Patenterteilung: **08.06.2016**
(21) Anmeldenummer: 11720005.5
(22) Anmeldetag: 27.04.2011
(51) Int. Cl.: A22C 15/00

(54) **STABZUFUHREINRICHTUNG AN EINER AUFHÄNGEVORRICHTUNG FÜR WURSTFÖRMIGE VERPACKUNGEN**
ROD FEEDING DEVICE IN A SUSPENSION DEVICE FOR SAUSAGE-SHAPED PACKAGES
DISPOSITIF D'ALIMENTATION D'UN DISPOSITIF DE SUSPENSION POUR EMBALLAGES EN FORME DE SAUCISSE

(30) Priorität: 30.04.2010 CH 6592010
(43) Veröffentlichungstag der Anmeldung: 06.03.2013
(73) Patentinhaber: Tipper Tie Alpina GmbH, 9230 Flawil (CH)
(72) Erfinder: LENDENMANN, Max, CH-9500 Wil (CH)
(74) Vertreter: Schalch, Rainer
(86) Internationale Anmeldenummer: PCT/CH2011/000092
(87) Internationale Veröffentlichungsnummer: WO 2011/134096

(56) Entgegenhaltungen:
- EP-A1- 1 891 858
- EP-A1- 1 985 185
- US-A1- 2005 159 093

## Beschreibung

### GEBIET DER ERFINDUNG

Die Erfindung betrifft eine Stabzufuhreinrichtung an einer Aufhängevorrichtung zur Aufhängung von wurstförmigen Verpackungseinheiten an Stäben, wobei die Einrichtung zur gleichzeitigen vertikalen Bewegung einer Mehrzahl von Stäben und zur Vereinzelung von Stäben in horizontaler Richtung in die Aufhängeposition ausgestaltet ist.

### STAND DER TECHNIK

Aus der europäischen Patentanmeldung EP 1 891 858 A1 ist eine Stabzufuhreinrichtung der eingangs genannten Art bekannt. Diese Zufuhreinrichtung hat sich bei der bekannten Aufhängelinie mit einer Verschliessvorrichtung für wurstförmige Verpackungseinheiten und einer Aufhängevorrichtung für die mit einer Hängeschlaufe versehenen Verpackungseinheiten bewährt. Für besonders lange Verpackungseinheiten bzw. Würste oder Wurstketten, welche z.B. eine Länge zwischen einem Meter und zwei Metern haben, sind eine solche Aufhängelinie und die bekannte Stabzufuhreinrichtung aber nicht geeignet.

Das Dokument EP 1 985 185 A1 offenbart eine ähnliche Stabzufuhreinrichtung an einer Aufhängevorrichtung für wurstförmige Verpackungseinheiten an Stäben

### DARSTELLUNG DER ERFINDUNG

Der Erfindung liegt die Aufgabe zu Grunde, eine Stabzufuhreinrichtung an einer Aufhängevorrichtung zu schaffen, welche zur Stabzuführung bei einer Aufhängevorrichtung für sehr lange Verpackungseinheiten geeignet ist.

Diese Aufgabe wird bei der eingangs genannten Einrichtung dadurch gelöst, dass die Stabzufuhreinrichtung ein angetriebenes Hebemittel zur Bewegung der Stäbe nach oben und angetrieben horizontal bewegbare Transportmittel zur Übernahme der Stäbe für die horizontale Bewegung aus der jeweils obersten Hebestellung eines Rauchstabs im Hebemittel aufweist.

Dadurch, dass die Stäbe nach oben gehoben werden, ist eine Beschickung der Stabzufuhreinrichtung mit den Stäben auf einer für die Bedienungsperson angenehmen Arbeitshöhe möglich, auch wenn die Stäbe für die Beladung mit sehr langen Verpackungseinheiten auf eine grosse Höhe gehoben werden müssen, bis sie die Horizontalbewegung in die Beladeposition zur Beladung mit den Verpackungseinheiten bzw. Würsten ausführen können.

Bevorzugt ist ein Beschickungstisch direkt beim Hebemittel angeordnet, auf dem die Stäbe zur manuellen Beschickung des Hebemittels angeordnet werden können. Das Hebemittel wird vorzugsweise von zwei umlaufenden Fördergliedern, insbesondere Förderketten, gebildet, welche eine Vielzahl von einander gegenüberliegenden Aufnahmen für die Enden der Rauchstäbe aufweisen. Vorzugsweise sind die Aufnahme L-förmige Aufnahmen, was eine einfache Beschickung erlaubt. In der jeweils obersten Hebestellung jedes Rauchstabes wird dieser vorzugsweise durch ein nach unten offenes U-förmiges Transportmittel derart aufgenommen, dass das Hebemittel den Rauchstab in das Transportmittel hinein anhebt. Dies erlaubt das einfache "Greifen" durch die den Rauchstab übergreifenden Schenkel des nach unten offenen U. Der Rauchstab ist dann durch eine lineare horizontale Bewegung des Transportmittels direkt oder über eine Zwischenposition, in welcher das Transportmittel den Rauchstab eritlässt, vorzugsweise in dem dieser durch Schwerkraft nach unten fällt, in die Beladestellung verbringbar. Das Transportmittel ist dann zurück in die Stellung über dem Hebemittel verfahrbar, damit der nächste Rauchstab in das Transportmittel angehoben werden kann.

### KURZE BESCHREIBUNG DER ZEICHNUNGEN

Im Folgenden werden Ausführungsbeispiele der Erfindung an Hand der Figuren näher erläutert. Dabei zeigt
Figur 1 eine Ansicht einer Anordnung aus einer Verschliessvorrichtung und einer Aufhängevorrichtung von vorne;
Figur 2 eine rückseitige Ansicht auf die Aufhängevorrichtung der Anordnung von Figur 1 mit der Stabzufuhreinrichtung;
Figur 3 die Stabzufuhreinrichtung in schaubildlicher Ansicht;
Figur 4 eine Detailansicht der Einrichtung von Figur 3;
Figur 5 eine schaubildliche Ansicht auf einen Teil der Stabzufuhreinrichtung zur Erläuterung der horizontalen Vereinzelung durch das Transportmittel;
Figur 6 eine schaubildliche Ansicht gemäss Figur 5 mit nach vorne bewegtem Stab; und
Figur 7 eine schaubildliche Ansicht gemäss den Figuren 5 und 6 mit ganz nach vorne bewegtem Stab.

### WEGE ZUR AUSFÜHRUNG DER ERFINDUNG

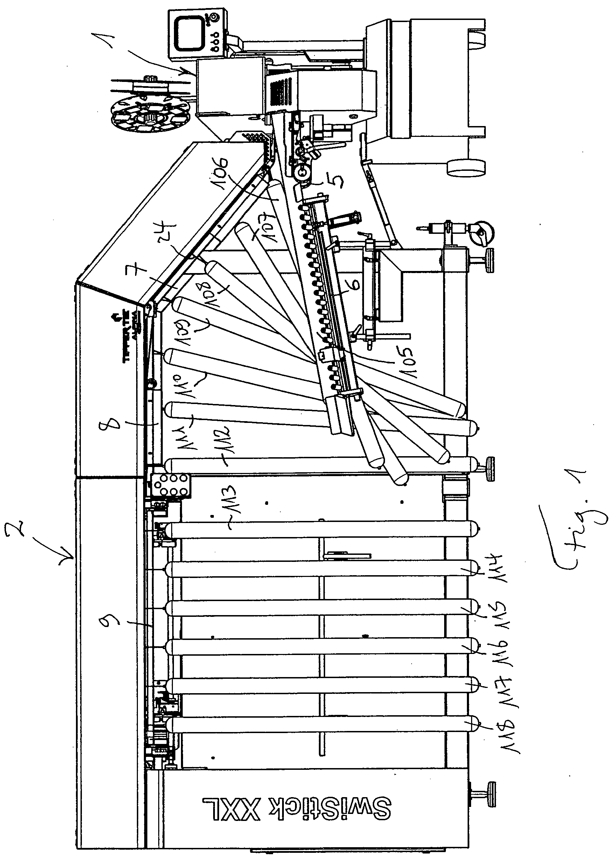

Figur 1 zeigt in Ansicht von vorne eine Anordnung aus einer Verschliessvorrichtung 1 für wurstförmige Verpackungen und einer Aufhängevorrichtung 2 für derartige Verpackungen, an welche in der Verschliessvorrichtung auf bekannte Weise jeweils eine Halteschlaufe 24 befestigt worden ist. Das Verschliessen der Verpackungseinheiten bzw. Würste erfolgt auf bekannte Weise mit Clipsen. Es kann dazu auf die Europäische Patentanmeldung EP 1 891 860 verwiesen werden, in welcher dies beschrieben ist. Rechts von der Verschliessvorrichtung 1 würde sich eine nicht gezeigte Füllvorrichtung befinden, deren Füllrohr auf bekannte Weise in die Verschliessvorrichtung hineinragt.

In Figur 1 ist ersichtlich, wie eine sehr lange wurstförmige Verpackungseinheit 105 die Verschliessvorrichtung verlässt und auf einem Förderband 5 und einer kippbaren Auflage 6 aufliegt. Die weiteren mit Bezugszeichen versehenen Verpackungseinheiten 106-118 haben vorgängig die Verschliessvorrichtung 1 sukzessive ebenfalls auf diese Weise verlassen. Nach der Befestigung der Halteschlaufe 24 an der jeweiligen Verpackungseinheit in der Verschliessvorrichtung wird diese Halteschlaufe von der Aufhängevorrichtung 2 gegriffen, so dass die jeweilige Verpackungseinheit durch Förderung der Halteschlaufe 24 weiter gefördert wird, wenn sie die Verschliessvorrichtung verlassen hat. Das Greifen der Halteschlaufe kann auf beliebige dem Fachmann bekannte Weise erfolgen, insbesondere durch an einem Fördermittel angeordnete Haken. Die Förderung in der Aufhängevorrichtung 2 erfolgt im gezeigten Beispiel zunächst an einem ansteigenden Abschnitt 7 der Vorrichtung 2 und danach an einem anschliessenden horizontalen Abschnitt 8 der Aufhängevorrichtung 2. Danach erfolgt eine Abgabe an einen weiteren horizontalen Förderabschnitt 9, auf welchem auf bekannte Weise ein Aufhängen der Verpackungseinheiten an einem Rauchstab 15 erfolgt. Für dieses Aufhängen bzw. das Positionieren und Loslassen der Verpackungseinheiten wird auf die Europäische Patentanmeldung EP 1 891 859 verwiesen, in welcher eine solche Übergabe an einen Rauchstab in den Abschnitten[0009] bis [0013] anhand der Figuren im Detail dargestellt ist. Auf diese Beschreibung wird der Fachmann verwiesen und diese wird durch die vorgängige Bezugnahme hier aufgenommen.

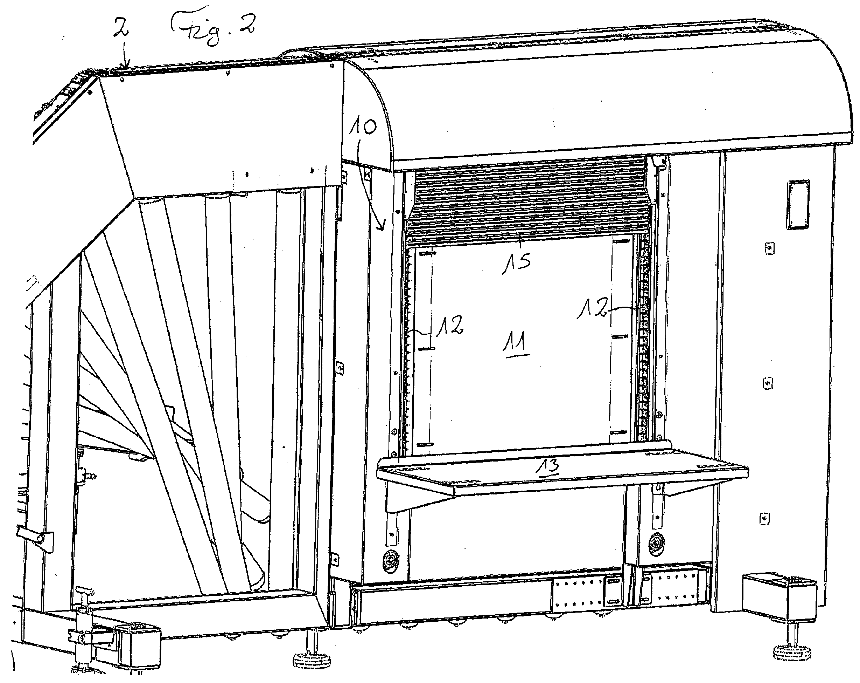

Figur 2 zeigt die Aufhängevorrichtung 2 von der Rückseite, wobei gleiche Bezugsziffern gleiche Elemente bezeichnen, wie dies in der Figur 1 der Fall ist. Von der Rückseite der Aufhängevorrichtung 2 her ist die Stabzufuhreinrichtung 10 gemäss diesem Ausführungsbeispiel der Erfindung ersichtlich. Die Stabzuführeinrichtung 10 hebt eine Vielzahl von Stäben 15, von denen nur einige dargestellt sind, nach oben, wozu ein Hebemittel 12 vorgesehen ist. Das Hebemittel greift an beiden Enden jedes Stabes an, um ihn nach oben zu bewegen. Eine Trennwand 11 zur Vorderseite der Vorrichtung 2 kann vorgesehen sein, sowie ein Ablagetisch 13, welcher direkt beim Hebemittel angeordnet ist und zur Ablage von Rauchstäben 15 dient, welche dann von Hand in das Hebemittel 12 geladen werden.

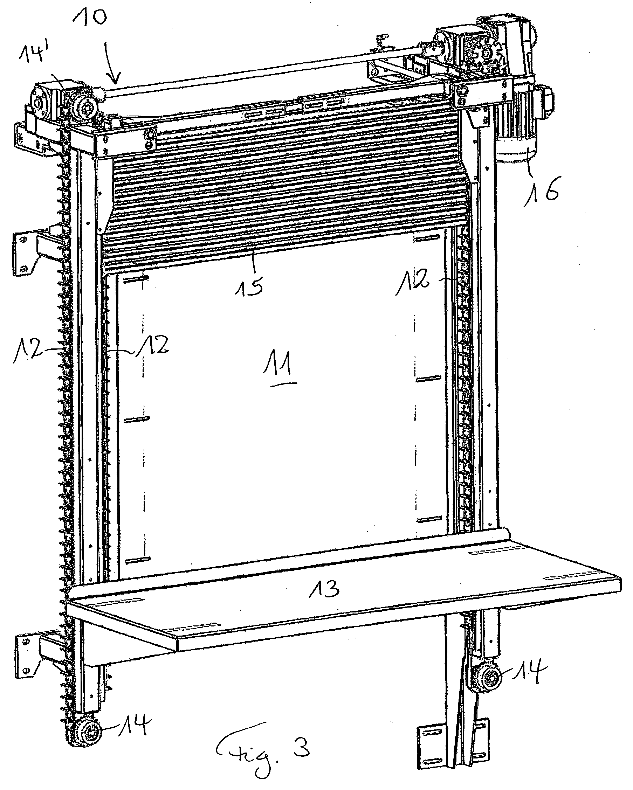

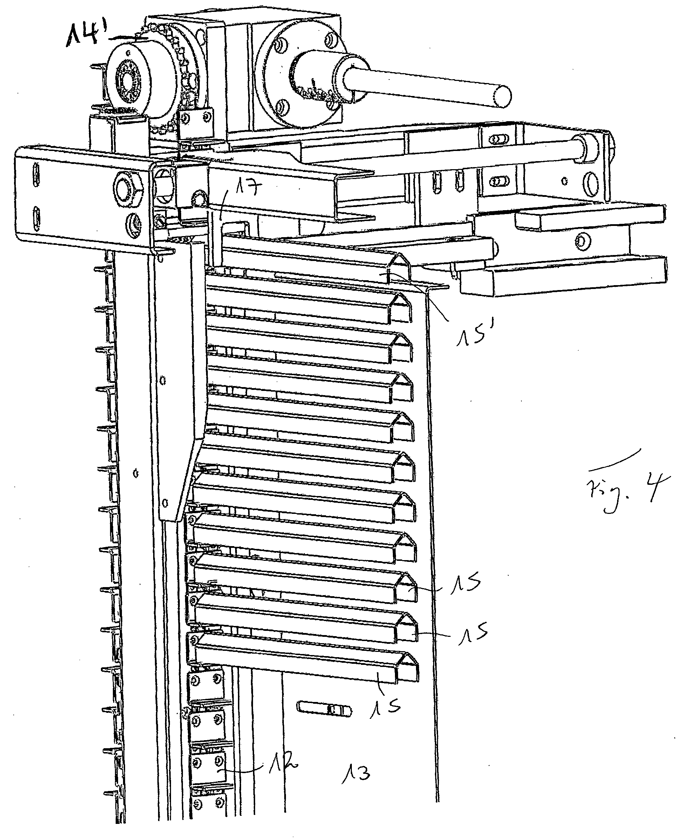

Figur 3 zeigt die Stabzufuhreinrichtung 10 getrennt von der Aufhängevorrichtung 2. Ersichtlich sind untere und obere Umlenkstellen 14 bzw. 14' für das an Getrieben bewegte Hebemittel 12. Der Antrieb ist z.B. mittels eines Servomotors 16 ausgeführt, um das schrittweise Anheben der Rauchstäbe nach oben hin auszuführen, wie dies noch erläutert wird. Die Figur 4 zeigt eine Detailansicht im Vertikalschnitt durch die Rauchstäbe 15 bzw. die Einrichtung 10, in welcher das Hebemittel 12, welches eine Vielzahl von L-förmigen Aufnahmen für die Rauchstäbe 15 ausbildet genauer ersichtlich ist. Die L-förmigen Aufnahmen erlauben ein einfaches Einlegen der Rauchstäbe in das Hebemittel 12. Der im Hebemittel oberste Rauchstab 15' hat die Position erreicht, in welcher er von der Stabzufuhreinrichtung bzw. von deren Transportmittel horizontal bewegt werden muss, um in die Beladestellung zu gelangen, in welcher auf bereits erwähnte bekannte Weise die Verpackungseinheiten 105-118 mit ihren Halteschlaufen 24 auf dem jeweiligen Rauchstab abgesetzt werden.

In Figur 4 ist ersichtlich, dass der oberste Rauchstab 15' durch das Hebemittel 12 mit dem vorgängigen Hebeschritt in einen nach unten offenen U-förmigen Bügel 17 des Transportmittels eingeführt worden ist. Am anderen, nicht ersichtlichen Ende des Rauchstabes 15' ist ebenfalls ein solcher Bügel vorgesehen.

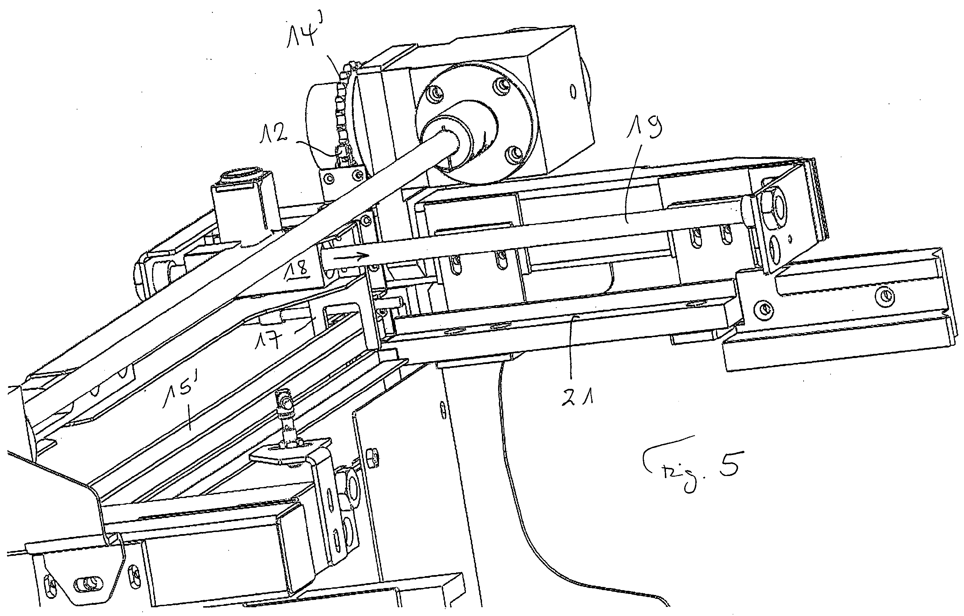

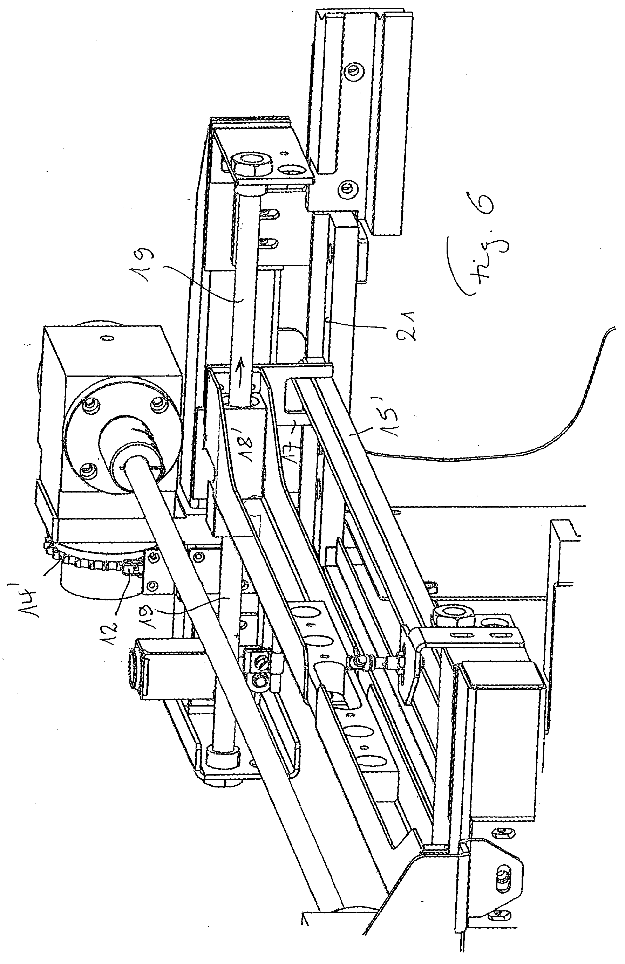

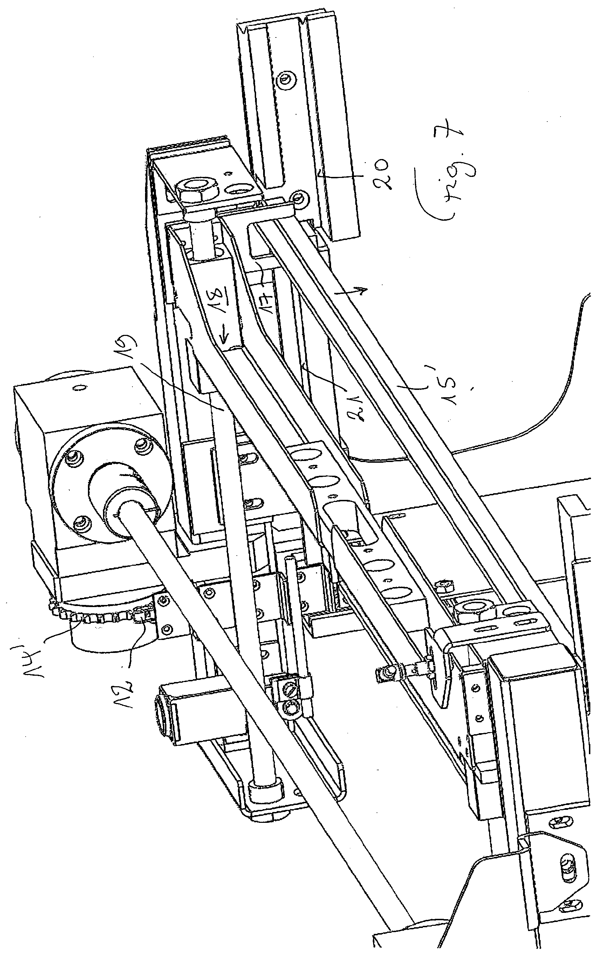

Die Figuren 5-7 zeigen nun die horizontale Bewegung des Rauchstabes 15' durch die Bügel 17, welche den Rauchstab entlang einer horizontalen Stützfläche 21 verschieben. Dazu ist eine angetrieben verschiebbare Schiebeführung 18 vorgesehen, welche mit dem Bügel 17 wirkverbunden ist und auf einer horizontalen Führungsstange 19 in Richtung des Pfeiles von Figur 5 bewegbar ist. Figur 6 zeigt, wie der Rauchstab 15' entsprechend verschoben wird und Figur 7 zeigt, wie der Rauchstab 15' das Ende der Führungsfläche 21 bereits passiert hat, so dass der Rauchstab 15' nach unten zur weiteren Führungsfläche 20 hin abgegeben wird. Dies kann im freien Fall oder mit einer Senk-Hubvorrichtung erfolgen. Auf dieser Fläche erfolgt eine weitere Verschiebung in der Zeichnung nach rechts, durch ein nicht dargestelltes Antriebsmittel, welche den Rauchstab 15' weiter in der Figur nach rechts schiebt. In der dadurch bewirkten Belade-Endstellung wird der Rauchstab 15' dann so gehalten und beladen, wie dies aus EP 1 891 858 dem Fachmann im Detail bekannt ist und daher hier nicht mehr erläutert werden muss. Sobald der Rauchstab 15' den Bügel 17 in der Figur 7 verlassen hat, kann dieser Bügel wieder in die Position gemäss Figur 5 zurückgefahren werden und der im Hebemittel 12 nächste Rauchstab 15" wird durch das Hebemittel angehoben, so dass dieser Rauchstab wiederum in den Bügel 17 gelangt und die in Figur 4 für den obersten Rauchstab dargestellte Stellung einnimmt. Dann erfolgt erneut das horizontale Bewegen des Rauchstabes in die Beladestellung.

## Patentansprüche

1. Stabzufuhreinrichtung (10) an einer Aufhängevorrichtung (2) für wurstförmige Verpackungseinheiten (105 bis 118) an Stäben (15, 15'), wobei die Einrichtung zur gleichzeitigen vertikalen Bewegung einer Mehrzahl von Stäben und zur Vereinzelung von Stäben in horizontaler Richtung in die Aufhängeposition ausgestaltet ist, **dadurch gekennzeichnet, dass** die Stabzufuhreinrichtung ein angetriebenes Hebemittel (12) zur Bewegung der Stäbe nach oben und angetrieben horizontal bewegbare Transportmittel aufweist, welche zur Übernahme der Stäbe für die horizontale Bewegung aus der jeweils obersten Hebestellung eines Rauchstabs im Hebemittel ausgestaltet sind.

2. Stabzufuhreinrichtung nach Anspruch 1, **gekennzeichnet durch** einen direkt beim Hebemittel (12) angeordneten Beschickungstisch (13).

3. Stabzufuhreinrichtung nach Anspruch 1 oder 2, **dadurch gekennzeichnet, dass** das Hebemittel (12) von zwei synchron umlaufend antreibbaren Fördergliedern gebildet ist, welche eine Vielzahl von einander gegenüberliegenden Aufnahmen für die Enden der Rauchstäbe aufweisen.

4. Stabzufuhreinrichtung nach Anspruch 3, **dadurch gekennzeichnet, dass** die Aufnahmen L-förmig sind und mit ihrem unteren L-Schenkel zueinander weisend angeordnet sind.

5. Stabzufuhreinrichtung nach einem der Ansprüche 1 bis 4, **dadurch gekennzeichnet, dass** das Transportmittel nach unten offene U-förmiges Bügel aufweist, in welche die Enden des obersten Rauchstabes durch das Hebemittel hinein anhebbar sind.

6. Aufhängevorrichtung (2) für wurstförmige, mit Halteschlaufen versehene Verpackungseinheiten, welche zum Aufhängen dieser Verpackungseinheiten an Rauchstäben ausgebildet ist und eine Stabzufuhreinrichtung (10) nach einem der Ansprüche 1 bis 5 aufweist.

## Claims

1. Stick feeding unit (10) in a suspension device (2) for sausage-type packaging units (105 to 118) suspended on sticks (15, 15'), wherein the unit is adapted to simultaneously move a plurality of sticks vertically and to separate sticks in a horizontal direction in the suspension position, **characterized in that** the stick feeding unit comprises an actuated lifting means (12) for moving the sticks upwards and actuated transport means which are movable horizontally and which are adapted to take over the sticks for the horizontal movement from the topmost lift position of a smoke stick in the lifting means.

2. Stick feeding unit according to claim 1, **characterized by** a charging table (13) arranged directly at the lifting means (12).

3. Stick feeding unit according to claim 1 or 2, **characterized in that** the lifting means (12) is formed by two transport members which are actuated in a synchronously revolving way, having a plurality of opposed receptacles for the ends of the smoke sticks.

4. Stick feeding unit according to claim 3, **characterized in that** the receptacles are L-shaped and are arranged with the lower L-arm pointing towards each other.

5. Stick feeding unit according to one of claims 1 to 4, **characterized in that** the transport means has U-shaped holders which are opened downwards, into which the extremities of the topmost smoke stick are lifted by the lifting means.

6. Suspension device (2) for sausage-type packaging units provided with hanging loops, adapted to suspend these packaging units on smoke sticks and comprising a stick feeding unit (10) according to one of claims 1 to 5.

## Revendications

1. Dispositif d'alimentation de bâtons (10) à un dispositif de suspension (2) pour des unités d'emballage (105 à 118) en forme de saucisson à des bâtons (15, 15'), le dispositif étant adapté à déplacer de manière simultanée une pluralité de bâtons verticalement et de séparer des bâtons dans une direction horizontale dans la position de suspension, **caractérisé en ce que** le dispositif d'alimentation de bâtons comprend un moyen de levage entraîné (12) pour déplacer les bâtons vers le haut et des moyens de transport entraînés qui sont déplaçables horizontalement et qui sont adaptés à prendre les bâtons pour le mouvement horizontal à partir de la position de levage la plus haute d'un bâton de fumage dans le moyen de levage.

2. Dispositif d'alimentation de bâtons selon la revendication 1, **caractérisé par** une table de chargement (13) arrangée directement aux moyens de levage (12).

3. Dispositif d'alimentation de bâtons selon la revendication 1 ou 2, **caractérisé en ce que** le moyen de levage (12) est formé par deux membres de transport entrainés en rotation de manière synchrone, qui ont une pluralité de récipients opposés pour les extrémités du bâton de fumage.

4. Dispositif d'alimentation de bâtons selon la revendication 3, **caractérisé en ce que** les récipients ont une forme de L et sont arrangés avec le bras en forme de L qui orienté l'un vers l'autre.

5. Dispositif d'alimentation de bâtons selon l'une des revendications 1 à 4, **caractérisé en ce que** le moyen de transport a des reteneurs en forme de U qui sont ouverts vers le bas, dans lesquels les extrémités du bâton de fumage le plus haut sont levées à travers le moyen de levage.

6. Dispositif de suspension (2) pour des unités d'emballage de saucissons, avec des boucles de retenue, adapté à suspendre ces unités d'emballage sur des bâtons de fumage et comprenant un dispositif d'alimentation de bâtons (10) selon l'une des revendications 1 à 5.
